# EUROPÄISCHE PATENTSCHRIFT

(11) **EP 4 476 487 B1**
(45) Veröffentlichungstag und Bekanntmachung des Hinweises auf die Patenterteilung: **22.04.2026**
(21) Anmeldenummer: 23708163.3
(22) Anmeldetag: 10.02.2023
(51) Int. Cl.: F24S 23/30, H02S 40/22

(54) **KRAFTWERKSYSTEM**
POWER PLANT SYSTEM
SYSTÈME DE CENTRALE ÉLECTRIQUE

(30) Priorität: 12.02.2022 DE 202022000360 U
(43) Veröffentlichungstag der Anmeldung: 18.12.2024
(73) Patentinhaber: Baisch, Wolfram, 63549 Ronneburg (DE); Ateiah, Jamhour, 66113 Saarbrücken (DE)
(72) Erfinder: BAISCH, Wolfram, 63549 Ronneburg (DE)
(74) Vertreter: Tergau & Walkenhorst Intellectual Property GmbH
(86) Internationale Anmeldenummer: PCT/EP2023/053370
(87) Internationale Veröffentlichungsnummer: WO 2023/152328

(56) Entgegenhaltungen:
- CN-A- 105 674 587
- DE-A1- 102008 062 739
- DE-B4- 102014 008 794
- US-A- 5 047 654
- US-A1- 2010 101 621
- US-A1- 2012 227 779
- US-A1- 2014 202 522
- US-A1- 2018 302 022
- US-B2- 8 689 784

## Beschreibung

Die Erfindung betrifft ein Kraftwerksystem, insbesondere zur Stromerzeugung auf nachhaltige Weise oder mittels erneuerbaren Energien.

Im Hinblick auf weiter steigende Energiebedarfe unter weltweiten ökonomischökologischen Kriterien, sowie zur Schonung im Umgang mit natürlich vorhandenen Ressourcen, insbesonders im Hinblick auf die derzeit zaghaften Beschlüsse von Industrienationen und der Forderung konsequenterer und schnellerer Umsetzung von Klimazielen, und die damit unmittelbar verbundene Verantwortung für nicht absehbare Klimaveränderungen auch für nachkommende Generationen, nicht zu vergessen Konsequenzen von Wanderungsbewegungen ganzer Völker und daraus zwangsweise resultierender sozialer Konflikte, erscheint eine nachhaltige, regenerative Stromerzeugung auch in industriellem Maßstab dringend erforderlich.

In der kürzer zurückliegenden Vergangenheit sind Energiesysteme auf den Markt gekommen, die im wesentlichen als Heizleiterfunktionssysteme auf Dächern verlegt wurden und werden, deren relative Energieleistung abhängig von Witterungseinflüssen bzw. entsprechend quantitativer Solareinstrahlung sind. Derartige Systeme sind in der Regel nicht dazu ausgelegt und auch nicht in der Lage, Temperaturwerte derart zu steigern oder zu erhöhen, dass signifikant energetische und erhöhte Temperatur-Sollwerte erreicht werden könnten, mit denen nachgeschaltete Energiewandler effizient betrieben werden können. Jahreszeitenbedingt, zum Beispiel in den Wintermonaten, beeinflussen Schneebelag oder Luftfeuchtbeläge objektiv erforderliche maximale Leistungsergebnisse, so dass parallel und ergänzend fossile Brennstoffe wie Öl, Gas oder Strom aus Kohleverstromung zusätzlich zum Einsatz kommen müssen, um Defizite dieser Systeme auszugleichen, um Wohnungen, Bürohochhäuser oder andere Bedarfssegmente mit Wärme bzw. Strom adäquat versorgen zu können.

Aus dem Stand heutiger Techniken ist eine Vielzahl an Systemen zur Energieerzeugung und Stromgenerierung bekannt. Vergleichsweise offenbaren u.a. Brennglas-Spiegelkombinationen Nutzbarkeiten von Sonneneinstrahlung, u.a. zur Herstellung von heißem Wasser u.ä. Energieträgern. Diese und ähnliche Systeme stoßen jedoch an Temperatur- und Energieobergrenzen, vor allem nachts- und wetterabhängig von den Einstrahlungs-Bedingungen.

Andererseits sollen neuartige ferroelektrische Kristallsysteme in Solarzellen eine um ein Vilefaches höhere Temperaturentwicklung gegenüber herkömmlichen Solartechniken erzielen. Dies kann jedoch in einer geradezu übermäßigen und daraus resultierend extrem überschüssigen, in der Kürze nicht verbrauchbaren und nicht speicherbaren Stromenergie münden, die ungenutzt bleiben muss. Desweiteren sind Fragen industriell-konomischer und ökologischer Produktionsprozesse ungeklärt. Zudem fehlen Antwoten auf Fragen der Verwertbarkeit/Anwendbarkeit dieser Extremtemperaturen auch im Zusammenhang von Gefahrenpotentialen. Herstellung von Komponenten dieser Solarsysteme sind zudem hinsichtlich Nachhaltigkeit überschaubar und nur bedingt klimaneutral.

Zur Problematik der noch nicht einmal ansatzweise gelösten Frage geeigneter Speicherungskapazitäten für diese extrem zu erwartenden und überschüssigen Energien, auch im Hinblick auf extrem hohe Investitionen, sind darüber hinaus noch nicht einmal ansatzweise technologisch wissenschaftliche Konzepte und Umsetzbarkeit angedacht. Es fallen bereits bei der theoretisch möglichen Erzielung von (wörtlich) 1000-fach höheren Temperaturpotentialen, weitestgehend unbekannte Multiplikations-Produktionsfaktoren hinsichtlich dieser plötzlich und enorm vorhandenen Energievolumina Probleme auf, auch im Hinblick auf Verbrauchszeträume, gleichzeitige Speicherung der Energieaufkommen, benötigter stand-by-Funktions-Energiedepots, weltweiter Klimafragen in der Summe neu und frei werdend zusätzlicher Wärme-/Temperaturquellen, die auch im Hinblick auf die Erderwärmung objektiv kontraproduktiv einzuschätzen sein können.

Konstant sich wiederholende Hororszenarien entstehender Kosten für den Bau von Energiespeichern, im Zusammenhang mit der Behauptung der Unwirtschaftlichkeit des Betriebes solcher Energiespeicher, werden mit der seit Jahrzehnten vernachlässigten Erforschung des Nutzens einer seit Jahrmillionen bestehenden und sicher noch weitere Jahrmilionen existierenden Energiequelle ausgeklammert, nämlich von Erdwärme. Durch heutige Technik dürften bereits in leicht erreichbaren Tiefen bestehende Temperaturen von ab 100°C bis ca. 160°C gefördert werden können, so dass eine beherrschbare Steuerung und Förderung dieser Energiepotentiale möglich sein sollte. Demgegenüber unterliegen Erdölfelder derartigen Bedenken oder Einschränkungen nicht.

Anstelle einer zunehmenden oder zumindest unveränderten Öl- bzw. Gasförderung, mit den bekannten Konsequenzen des Ausstoßes von CO₂, müsste eine wesentlich klimaneutralere Geothermie wie Erdwärme- Temperaturnutzung ohne größere Probleme möglich sein. Befürchtungen im Hinblick auf Gefahren der Auslösung von Erdbeben oder dergleichen durch Förderung von Erdwärme erscheinen sachlich nicht gerechtfertigt. Förderung von Erdwärme wird vielmehr aus Unwissenheit, wie oben beschrieben, ausgeblendet. Damit werden Chancen, Wissen, Erfahrungswerte und Beherrschbarkeit grade und auch im Hinblick auf Raumfahrtprogramme und der Eroberung des Sonnensystems bzw. des Universums verwirkt.

Das Risiko, durch Förderung von Erdwärme rund um den Globus Erdbeben auszulösen, ist allerdings vermutlich deutlich weniger nachteilig als auf längere Sicht durch den unverminderten Ausstoß von CO₂ der Menschheit die Lebensgrundlagen zu entziehen.

Ziel der vorliegenden Erfindung ist es daher, die oben genannten Rahmenbedingungen und Perpektiven mit den zur Zeit herrschenden Gegebenheiten zu vermitteln, Kosten/Nutzen, Einsatz und Ausbeute im Hinblick auf Erderwärmungskriterien angepasst zu optimieren, existierende und extern leistungsbegrenzte Speicherpotentiale entsprechend einzubinden/auszubauen, und das hier erfindungsgemäß beschriebene Stromenergie-System für erforderliche, bzw. notwendige Strom-Energieproduktion mit dem hier vorgestellten Sammellinsen-Laser-Vorrichtungssytem zur Strom-Energiegewinnung auszurichten und zur Verfügung zu stellen.

Aus der US 8,689,784 B2 ist ein Kraftwerkssystem mit einer Anzahl von durch Licht gespeisten Energiewandlern bekannt, denen lichtseitig eine Sammellinsen-Anordnung vorgeschaltet ist. In der US 2012/0227779 A1 sind Speicherlemente stromseitig nachgeschaltet.

Aufgabe der Erfindung ist, noch weitergehende Möglichkeiten zur Energieversorgung zu schaffen, scheinbar unbeeinflussbar vordergründige Abhänginkeiten konstanter Tages- bzw. Solarlichteinstrahlung bei Tageslicht, besonders während Nacht- und/oder Schlechtwetterphasen, Schnee und/oder Feuchtauflage/Belag auf Linsen- und Lasersystemen zu umgehen, damit nachhaltig und möglichst lückenlos essenzielle, vor allem ökonomisch-ökologische Energieversorgung zu gewährleisten und sicherzustellen.

Die oben genannten Probleme bzw. Anforderungen werden erfindungsgemäß gelöst durch ein Kraftwerkssystem mit den Merkmalen von Anspruch 1.

Die Erfindung geht dabei von der Überlegung aus, dass herkömmliche Energiewandler, die einfallendes Licht direkt oder indirekt in elektrischen Strom umwandeln, bei gesteigerter Intensität des einfallenden Lichts mit einem deutlich erhöhten Wirkungsgrad betrieben werden könnten. Gerade im Hinblick auf den Umstand, dass nur in den seltensten Fällen im alltäglichen Gebrauch mit einem hoch intensiven Lichteinfall, beispielsweise vollem Sonnenschein, gerechnet werden kann, sollte daher ein solches Kraftwerkssystem auch für Situationen mit nur mittelmäßigem Lichteinfall gezielt ertüchtigt werden. Um dies zu ermöglichen, sind den Energiewandlern gemäß einem Aspekt der Erfindung Sammellinsen-Systeme vorgeschaltet, die den Lichteinfall auch bei nur mäßigen Lichtverhältnissen bündeln und somit für eine hohe Bestrahlungsintensität bei den Energiewandlern sorgen.

Dabei wird gemäß einem Aspekt der Erfindung unter anderem die Erkenntnis genutzt, dass beispielsweise bereits einfache Brillengläser bei einfallendem Sonnenlicht in ihrem Brennpunkt Temperaturen von etwa 350°C erzeugen können. Vorteilhafterweise und gemäß einem Aspekt der Erfindung sind die Sammellinsen des Sammellinsen-Systems mit einem diamant-Facetten-Schliff versehen, um eine solche Fokussierungswirkung im Brennpunkt noch weiter zu verbessern.

Bei den Energiewandlern kann es sich um beliebige Systeme handeln, die einfallendes Licht direkt oder indirekt in elektrischen Strom konvertieren, beispielsweise Photozellen, photovoltaische Systeme, photothermische Systeme, bei denen ein Medium wie beispielsweise Wasser durch das einfallende fokussierte Licht aufgeheizt und später zur Stromerzeugung genutzt wird, oder dergleichen.

Gemäß einem Aspekt der Erfindung sieht die Erfindung ein in sich geschlossenes, in Wechselwirkung/Wechselfunktion integriert konvergierendes Sammellinsen-Strahlungssystem vor, vorzugsweise zusätzlich und in Symbiose mit Laserstrahlungssystemen bzw. laseraktiven Medien, überwiegend intern generierter Besetzungsinversionen kraft stimulierter Lichtemissionen bzw. Laserresonator, um mittels weiterer Emissionen bzw. Pumpmechanismen in Folge Kettenreaktion angeregter Energieausschüttungs-/ Ergebnisse zu erzielen.

Beim hier vorliegend erfindungsgemäßen Lichtenergie-Laser-Stromkraftwerk ist von Vorteil, dass sich beispielsweise bereits im ersten Schritt der Lichteinstrahlung durch/in ein Sammel-Linsensystem bestehend aus Sondermaterialien bestimmter Glaskeramikstrukturen, hinsichtlich ihrer äußerst geringen Wärmeausdehnungskoeffizienz, sowie extrem hohen mechanischen Festigkeit, insbesondere für das erfindungsgemäße Lichtenergie-Laser-Stromkraftwerk empfehlen. Diese beispielsweise aus Glaskeramik bestehenden Materialien haben sich bereits in der Vergangenheit, gerade auch unter Industriell extremen Belastungsprozessen, besonders unter Einfluss sehr hoher Temperaturbeständigkeit, bzw. Langzeitbelastungsphasen als äußerst stabile Materialien ausgezeichnet und bewährt.

Beim erfindungsgemäßen Sammel-Linsensystem sollen nunmehr und beispielsweise Glaskeramik oder Gläser als sog. Wirtskristalle für laseraktive Dotierungen Einsatz finden oder auch teilkristallines Glas, sog Hybride, die sich sowohl durch eine besonders hohe mechanische Festigkeit als auch einen sehr niedrigen thermischen Ausdehnungskoeffizienten auszeichnen. Diese oder ähnliche Glasoptik-Werkstoffe, beispielsweise Flintgläser, sollen in Größen von bis zu 700 mm Durchmesser, je nach Leistungs-Bedarfsberechnungen, zum Einsatz kommen und adäquat zu örtlichen Rahmenbedingungen d.h. erforderlichen Bedarfsanforderungen/Volumina in Menge, Anzahl und Größen auf entsprechenden Trägermedien im Kontext mit anderen Baukomponenten positioniert werden.

Nach Eintritt von Sonnen-/Licht in/durch Sammell-Linsen, sog. sphärische oder auch asphärische Linsen, dies könnten Plankonvexlinsen, Bikonvexlinsen, Bikonvexlinsen asymetrisch oder Konkavkonvexlinsen (Meniskus) mit für die im Kontext der vorliegenden Erfindung entsprechender geeigneter Oberflächenkrümmung sein, konvergiert Licht und fokussiert im Brennpunkt (f). Nunmehr ist es von Vorteil, dass nach Eintritt des Lichts über das Sammel-Linsensystem, das konvergierte Licht im Brennpunkt F fokussiert wird und die entstehenden Energiepotentiale durch geeignete Umwandlungssysteme in Stromenergien umgesetzt werden. Der erzeugte Strom kann dann bedarfsgerecht einer Nutzung zugeführt und bedarfsweise in Stromnetze weiterleitet. Gemäß der Erfiindung sind den Energiewandlern stromseitig auch eine Anzahl von Speicherelementen nachgeschaltet, in denen überschüssiger Strom zur Erzeugung von Besetzungsinversionen genutzt werden kann. Diese können zu einem späteren Zeitpunkt gemäß einem Aspekt der Erfindung wiederum zur Erzeugung von Laserlicht genutzt werden, das auf die Energiewandler eingestrahlt werden kann. Damit kann in lichtschwachen Phasen, insbesondere bei nachlassendem Tageslicht, die Einstrahlung auf die Energiewandler unterstützt und verstärkt werden, so dass die Energiewandler selbst in diesen Phasen hoch effizient arbeiten können. Der überschüssige Strom soll somit gemäß einem Aspekt der Erfindung segmentiert in hierfür parallel im stand by-Modus stehenden Strom-/Speicher-/Batterie-Depots (mit Besetzungsinversionen) bis zu einer späteren Nutzung während einstrahlungsschwacher Tages-/ Schlechtwetter-/ bzw. Nachtphasen bevorratet werden.

Im Hinblick auf die Addidition einer bestimmten Anzahl bzw. Vielzahl sphärischer oder auch asphärischen Sammel-Linsensysteme, bei konstant relativ intensiver vor allem winkeladäquater Solareinstrahlung, zu erwähnen sei an dieser Stelle eine Schlüsselfunktion im Kontext in Verbindung mit integrierter Lasertechnik sog. Mikrolinsenarrays, können signifikante Temperaturvolumina im Brennpunkt von annähernd 350°C und darüber hinaus, höhere Temperatur-/Sollwerte in der Summe erzielt werden. Eine efektiv geeignete Zerlegung entstehender Strahlenbündel erlaubt im Kontext eine homogene und zieführende Intensitätsverteilung.

Innnerhalb jeder einzelnen Sammel-Linse sollen sich direkt unter deren Oberflächen endogen beheizbare, möglicherweise transparente Heizleiter befinden, um Schnee und Eis abzutauen oder Feuchtigkeitsablagerungen zu verdampfen, um ungehinderte Lichteinstrahlung zu gewährleisten. Insbesondere könnte dies auch dadurch realisiert werden, dass jeder einzelne Sammel-Linsenkorpus, beipielsweise bestehend aus haarfeinen Edelstahlring-Legierungen z.B. Cr-Ni-, Cr-Al o.ä. oder endogen mit beheizbar transparenten wärmeleitenden Glasnetzstrukturen versehen ist. Drainagenablaufrillen fördern darüber hinaus, durch stufenlos bewegliche Schräglage der Sammellinsen Trägerflächen/Plattformen gemäß Sonnenstand, ungehinderten Stau-/- Wasserablauf.

Die durch Fokussierungsintensität an Brennpunkten f entstandenen TemperaturWerte werden im Kontext und in Gesamtsumme nunmehr nachfolgender Lichtwellen-Streuung in systemseitig verbaute Energieumwandler eingeleitet. Bereits zu diesem Punkt der Energiegewinnung könnten durch Brennweitenanpassung-/Veränderungen Energie-Dosierungspotentiale zu dynamischer Temperatur- bzw. Energiesteuerung für eine externe Einleitung, beispielsweise in öffentliche Stromnetze oder für interne Besetzungsinversonen genutzt werden. Eine derart computergestützte Energie-Verteilungssystematik hat den Vorteil ausgewogener Nutzung der Energieanteile.

Um o.a. gestellte Forderung zur Beseitigung physischer Hindernisse zu erfüllen, kommen vorteilhafterweise zeitgleich, ebenfalls bei computererfassten Veränderungen von Temperaturwerten, d.h. energiereduzierenden Auffälligkeiten, hervorgerufen beispielsweise durch Bewölkung oder andere Einstrahlungshindernisse, systemseitig Maßnahmen zur Wiederherstellung erforderlicher Leistungsniveaus automatisch zum Einsatz. Insbesondere kann kurzzeitig nach der Erfassung der genannten Kriterien, eine interne Zuschaltung von Stromenergiespeichern mit und für Besetzungsinversionen vorgesehen sein, wobei, zeitlich begrenzt, entsprechend hierfür nötige Strom-Leistungskontingente abgerufen werden, um wieder einen stabilen Betriebszustand der Energieerzeuger herzustellen.

Bei Solareinstrahlungs-Ausfallzeiten, d.h. systemseitig computererfasste Energierverlust-Auffälligkeiten, wie beispielsweise längere Bewölkungsabschnitte, Regenschauerszenarien, tatsächlich vor Ort bestehenden ungünstigen Witterungsgegebenheiten, wie beispielsweise Schneefall, Nebel etc., schaltet das System automatisch auf einen sog. Dunkelheitsmodus, um den registrierten Energie-Einstrahlungsmangel zu kompensieren. Auch und besonders während und nach Sonnenuntergang, und ab gemessen registrierten Dämmerlichtwerten, können und werden systemseitig zusätzlich Lichtsysteme zugeschaltet, die stimulierte Laser-Lichtemissionen entwickeln, und damit zur weiteren und allgemeinen Energiesicherung beitragen. Zur Erzeugung von Laserstrahlung sind jedoch Besetzungsinversionen sehr förderlich, da ansonsten angeregte Elektronen durch spontane Emission die zugeführte Energie wieder verlieren.

Von bedeutendem Vorteil ist daher, dass bei der Vielzahl von Laserlichtsystemen für das vorliegend erfindungsgemäße Absorber-Kraftwerk zur Stromerzeugung, ein adäquat passendes "Lichtverstärkungs-System" zur Disposition steht. Eignen würden sich für das vorliegende Kraftwerksystem modifizierte Festkörperlaser oder modifizierte Helium-Neon-Laser-Systeme.

Weiterhin ist von Vorteil, dass das erfindungsgemäße lichtenergetische Laser-Stromkraftwerk über deponierte d.h. gespeicherte Energiereserven oder Besetzungsinversion primär und speziell für ein systemseitiges Betriebs-Energiesystem verfügt, um damit weitestgehend die Aufrechterhaltung der Produktion von Licht-Emission-Energieeinstrahlung selbst während zeitweiser, ungünstiger Witterungseinflüsse oder schwächelnder Lichteinstrahlung nahtlos aufrechtzuerhalten, und damit die Absicherung öffentlicher Energieversorgung ermöglicht.

Darüber hinaus ist es von elementarem Vorteil, mangelnde Lichteinstrahlung, besonders ab einer bestimmten Licht-Eintrittsgrenze, beispielsweise zur Abend-Dämmerung, oder ab eingetretener nächtlich konstanter Dunkelheit, zur Gewährleistung sog. Nachtstromversorgung durch die vorgesehenen Lasersysteme zu kompensieren. Diese sind vorteilhafterweise und gemäß einem Aspekt der Erfindung mittels einer geeigneten Positioniervorrichtung geeignet platzierbar, so dass das Laserlicht auf die Energiewandler einstrahlen kannn. Vorzugsweise ist hierzu ein integriertes, insbesondere drehbares, Hydraulik-Teleskopsystem vorgesehen. Dieses kann aktiviert werden, um symbiotisch eng verknüpfte Laser-Lichtquellen-Systeme zu aktivieren, damit vollumfänglich fehlende Tageslicht-/Solareinstrahlung über/durch ein beispielsweise zuschaltbares Zerstreuungslinsen-/- Systeme in Form von Zersteuungslichteinheiten, oder über zuschaltbare Wechseloptiken Licht in sog. Haupt-Laserstrahlen, umwandelt d.h. punktförmige Fokus-Laser-Lichtstrahlen durch das darunter gelegene basisorientierte Sammellinsensystem der Primärebene in Brennpunkte einleitet, um damit die Fortdauer der Bestrahlungs-Methodik d.h. Energiegewinnung für eine nächtlich erforderliche Betriebsaktivität gewährleistet bzw. weitestgehend adäquat ersetzt.

Zusätzlich ist von Vorteil, wenn unter computergestützter Start-Aktivierung systemseitig verbaute Laser-Lichtvorrichtungen zu Beginn nächtlicher Dunkelphasen oder länger anhaltender Starkbewölkungsphasen dosiert und computergestützt zugeschaltet werden. Beispielsweise über Widerstandsregler kann die gewünschte Laser-Lichteinstrahlung auf die Sammellinsensysteme gesteuert und abgerufen werden, wobei die Besetzungsinversions-Kontingente entsprechend bedarfsorientiert zuzugeschaltet werden.

Weiterhin ist von Vorteil, wenn für eine nächtlich angepasste Energieversorgung ein systemseitig vorhandenes Laser-Lichtquellen-System zuschaltbar ist, und, je nach Erfordernissen, auswechselbare Laserlicht-Zerstreuungsoptiken, ähnlich einer Tageslicht intensiven Sonnen-Streulicht-einstrahlung oder, je nach leistungsorientiert effektiven bzw.ökonomisch erforderlichen Kriterien, punktförmige Focus-Laser-Hauptstrahloptiken zum Einsatz kommen. Ein vorzugsweise hydraulischer Positonierungsvorgang des Laser-Lichtquellen-Systems wird computergesteuert, unter Berücksichtigung örtlich aktueller Lichtverhältnisse bzw. im Zusammenhang vorherrschender Wettersituation, automatisch ausgelöst und exakt über einem fokussierenden Sammellinsen-Vorrichtungssystem in der kongruenten Stellung arretiert, um eine entsprechend effektive und ergebnisorientierte Energieausbeute zu gewährleisten.

Vorteilhaft zudem ist, wenn die erfindungsgemäße Symbiose aus einer bestimmten Anzahl fokussierender Sammellinsenoptiken, insbesondere mit spezifisch ausgerichteten Streuungs-Charakteristika, angeordnet auf einer sog. Primärebene, mit einer bestimmten Anzahl daneben oder darüber auf einer sog. Sekundärebene angeordneter bereitstehender Laserlicht-Systeme, vorzugsweise mit ebenso spezifischen Streuungs-Charakteristika, im Kontext eine besonders günstige und ergebnisorientierte Ergänzung hinsichtlich einer optimalen Energie-/Stromerzeugung im Zusammenwirken darstellen.

Von wesentlichem Vortei ist, dass systemseitig je Lasereinheit mindestens ein Laserresonator Photonen anregt, um in Kettenreaktion weitere Emissionen auszulösen, die nunmehr in der Lage sind, stimulierte Lichtemissionen zu erzeugen. Von großem Vorteil ist, dass beide in sich geschlossenen Systeme, einerseits der von Sammellinsensystemen systemseitig befindlich auf der Primärebene, andererseits und ebenso systemseitig Lasersystemeinheiten befindlich auf der Sekundärebene, zur fundamental vernetzten Funktionsfähikeit und Koexistenz, erforderlich exakte Positionierungspunkte, herbeigeführt durch hydraulisch drehungbewegungsfähige- bzw. Teleskopmechanische Roboteranlagen positioniert werden können.

Weiterhin ist es von Vorteil, wenn das fixierte, jedoch nach Sonnenstand bewegliche Sammellinsen-/Brennglas-System der Unterebene, mit dem nunmehr genau darüber positionierbaren Laserstrahlungssystem kompatibel interferieren kann. Unabdingbar ist daher, zwischen laseraktivem Medium und Sammellinsen-/Brennglas-System, entstehende lawinenähnliche spontane Kettenreaktionen von Licht-Emissionen, durch äußerst präzise Positionierung, in jeder Sonnenstand-Veränderungsphase der unteren Frequenzquelle zu gewährleisten und mit Lasermesstechnik nachzujustieren.

Ein weiterer Vorteil ergibt sich aus der systemseitig konzipierten Flexibilität optischer Variationsmöglichkeiten der je nach Erfordernissen und Gründen der Effizienz mit dem Austausch bzw. Wechselfähigkeit der Laserstrahlungsoptik insofern, als sowohl fokussierende bzw. gebündelte Punktstrahlung generiert werden könnten, durch das darunter befindliche Sammellinsen-/- Brennglas-System auch als Zerstreuungslichtstrahlung Brenngläser durchdringen, um somit adäquat und weitestgehend annähernd Sonneneinstrahlung, ggf. über zwischengeschaltet geeignete Dispersions- bzw. Polarisationsprismen den Strahlungscharakter des Sonnenlichts zu reproduzieren.

Darüber hinaus ist es grundsätzlich von Vorteil, dass für die Schaffung von Laserstrahlung zunächst keine externe Energie zugeführt werden muss, sondern die erforderliche Besetzungsinversion durch vorhanden und erzeugte Eigenenergie aus internen Speicher-Depots für den Pumpmechanismus des Laserprozesses zugeführt werden kann. Innerhalb mindestens eines systemseitig nötigen laseraktiven Mediums ist je ein Resonator positioniert, der eine Vielzahl Photonen erzeugt um weitere stimulierte Emissionen zu erzeugen. Beispielsweise könnten Festkörperlaser u.ä. Systeme die hauptsächlich mit laseraktiven Medien dotierten Kristallen oder Gläsern in Funktion stehen, für die erfindungsgemäße Systematik eines Strom-Brennglas-Laserkraftwerks Verwendung finden.

Weiterhin zählt zur zentralen Aufgabe einer nötigen maximalen Laserkavität, d.h. Anregung höherer Frequenzen und weiterer stimulierten Emissionen, damit stiegender Leistungsergebnisse, der oben beschriebene Laserresonator. Im Zusammenwirken erzeugt der Laserresonator identische Photonen, die diese von Spiegeln im Medium halten, um so die Möglichkeit weiterer Stimulationen signifikant zu verstärken bzw. zu potenzieren.

Weiterhin ist es von Vorteil, dass zur Stromerzeugung eine Durchdringung/Durchstrahlung mittels stimuliert emittierender Laserstrahlung, wechselweise mit Laser-Strahlen-Bündelung und/oder Laser-Zerstreuungslicht durch optische Sammellinsen-Systeme durchgeführt werden kann, um nach computererfasstem Maximal-Energieergebnis und im Anschluss dann primär diese Stromenergie in ein allgemein öffentliches Stromnetz einzuspeisen. Parallel bzw. zeitgleich können bestimmte Energievolumina wiederrum auch in interne Speicherdepots zur Bevorratung in Batteriedepots eingeleitet werden.

Für o.a. beschriebenen zum Einsatz bevorzugten Laserlichtsysteme, sowie für o.a. beschriebenen Laser-aktiv-Anwendungen sind spezifische Brennweiteneinstellungen für optimale Laserlichterzeugung ebenso vorteilhaft, wie fundamental adäquat erzeugte Wellenlängenstimulation emittierter Lichtstrahlungsintensität zur Erzeugung erforderlicher Besetzungsinversion benötigter laserseitiger Pumpenenergie.

Schließlich und erheblich von Bedeutung sind von essenziellem Vorteil topografisch geeignete Standorte für das hier beschriebene fokussierende Vorrichtungs-Absorber-Energie-Kraftwerksystem zur Stromerzeugung, welches eine bis zum totalen Sonnenuntergang störungsfreie Lichteinstrahlung erfordert. Ebenso essenziell und fundemental sind topografisch geeignete Standorte, die bereits die ersten morgendlichen Lichtemissionen der Sonne aufnehmen können. Hanglagen für das erfindungsgemäße Absorber-Energie-Kraftwerksystem eignen sich besonders für optimale Ergebnisse.

Dabei ist von bedeutendem Vorteil, dass bereits die ersten Lichtemissionen bzw. die ersten Spektralbereiche vom sichtbaren Lichtwellen des Tageslichts, besonders durch bewegliche Licht-Aufnahmebereiche der Konstruktion, des beschriebenen Kraftwerk-Strom-Energie-Systems, computergesteuert gemäß jedem Sonnenstand in Neigungs-/Drehungs-/und hydrauscher Höhenpositionierung, ähnlich wie bei Spiegelteleskopen, befähigt ist.

Demnach ist es erfindungsgemäß, wenn das Kraftwerk-Strom-Energie-System, bzw. das fokussierende Sammellinsen-Vorrichtungssytem, als Absorber-Kraftwerk, zur Strom-Energiegewinnung mittels Solar-Einstrahlung, im Zusammenwirken sämtlicher o.a. Fakten zu klimaneutraler Energiegewinnung und gleichzeitig allgemeiner Ressourcenschonung, damit elementar und lebenserhaltenden Nachhaltigkeit verwendet wird.

Demgemäß ist erfindungsgemäß, wenn das erfindungsgemäße fokussierende Vorrichtungs-Absorber-Energie-Kraftwerksystem zur Stromerzeugung bzw. Absorber-Energie-Kraftwerksystem zur Erzeugung von elekrischem Strom zur Einspeisung in öffentliche Stromnetzsysteme Verwendung findet.

Insbesondere stellt die Erfindung ein thermodynamisches Absorber-System zur Erzielung von E-Stromenergie mittels Sonnen-/Tages-/Lichteinstrahlung durch fokussierende Sammellinsen-/ bzw. Zerstreuungs-Linsen Absorber-Systeme dar, bei dem vorzusgweise während Dunkelheitszeiträumen in Nächten, überdies Schlechtwetterphasen, periodisch oder phasenweise aktive Laserlichteinstrahlung durch ebensolch fokussierende Sammellinsen-/ Zerstreuungs-Linsen-Systeme, mittels stimulierender Laserlicht-Emissions-Einstrahlung zugeführt wird, gestützt durch systemisch redundante Besetzungsinversionen, um unter Prämisse von Nachhaltigkeit sowie Klimaneutralität E-Stromenergie zu erzeugen.

Die Erfindung wird im Nachfolgenden anhand der Figuren beispielhaft erläutert, wobei diese zeigen:

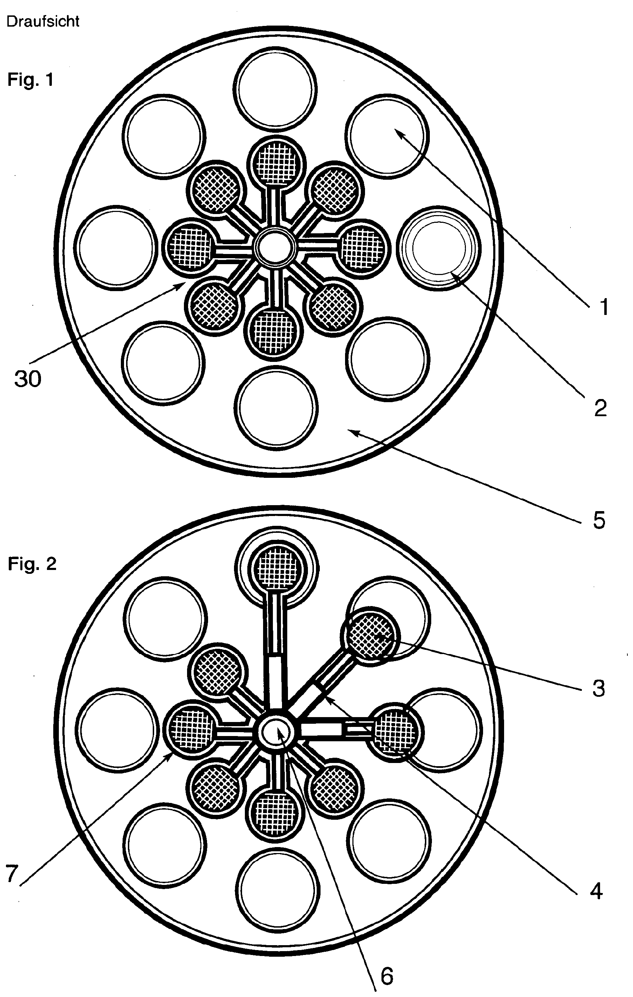

Fig. 1 - skizzenhaft, perspektivisch erfindungsgemäße Darstellung einer kreisrunden Kraftwerksanlage zur Stromentwicklung: Primär- ebene 5, mit hierauf angeordneten Sammel-- Brennglas-Linsensystemen 21, (bikonvex bzw. plankonvex 22, bzw. konkavkonvex 23), endogen systemseitig/eingegossenen Heizleitern 3, gegen Schneebelag/Kondenzwasser etc.
Fig. 2 - skizzenhafte perspektivische Darstellung einer erfindungsgemäßen Kraftwerksanlage zur Stromentwicklung: Sekundärebene 2, hierauf systemseitig skizziertem Teleskop-Arm-/Mechanismus 6 zur Laser-Positionierung für/während der Nacht bzw. starker Bewölkungsphasen, Laserstrahlsystematik-Vorrich- tungen in Parkposition 7, Drehachse 4

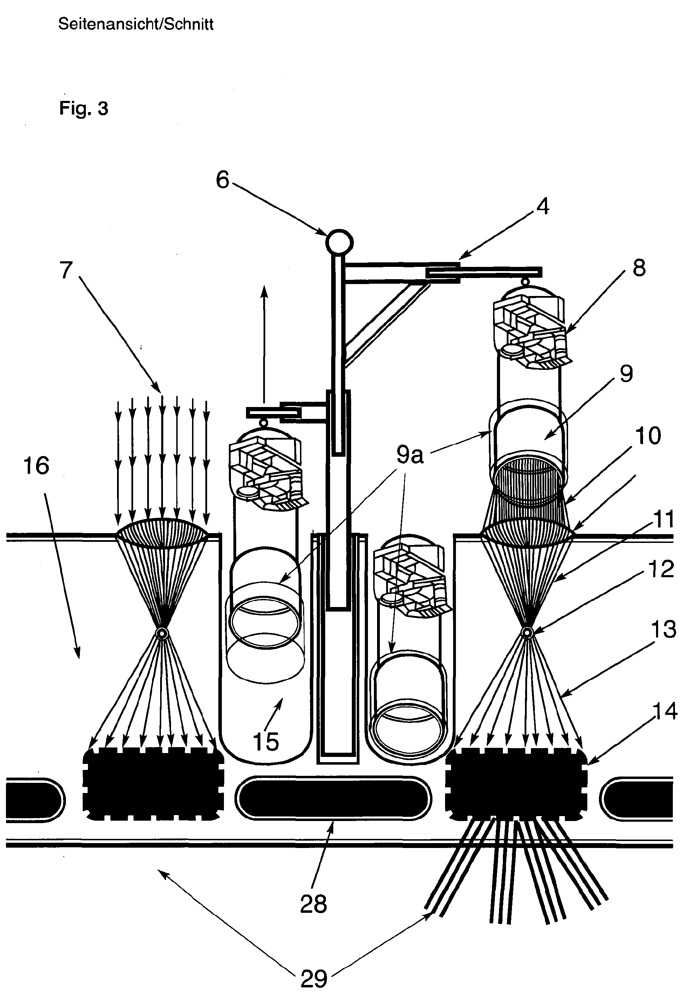

Fig. 3 - skizzenhaft perspektivische Seitenansicht der erfindungsgemäßen Kraftwerksanlage zur Stromentwicklung: Laser-Hard-/- und Software 8, nächtliche Lichtschutz-Zylinder- Abdeckung 9a, Laser-Linsen-Gehäuse 10, fokussierte Lichtstrahlen 11, Brennpunkt f 12, Strahlen Ausbreitungscharakteristik nach Fokussie- rung durch mindestens einen Brennpunkt f 13, Energieumwandler 14, Parkgehäuse von Laser-Strahlsystemen 15, Gehäuse 16

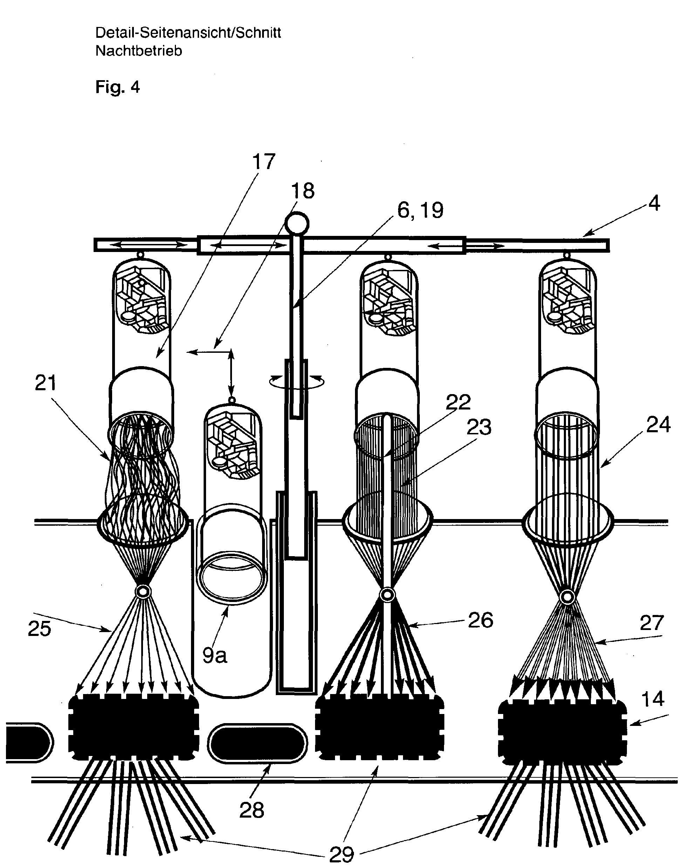

Fig. 4 - skizzenhaft perspektivische Darstellung einer erfindungsgemäßen Kraftwerksanlage zur Stromentwicklung: Teleskopmechanismus zur Positionierung von Lasersystem-Einheiten 17 u. 19, Bewegungsmuster von Lasersystem-Einheiten senkrecht bzw.waagrecht 18, Aufhängung von Laser-Einheiten 20, Strahlen-Charak- teristik/Strahlenradius monochromatisch inkohärent (LED-Licht) 21, Strahlencharakteristik/Strahlenradius, monochromatisch kohärent (23), plus zusätzlich optische Komponenten fokussierter Laserstrahlen 22, Strahlen-Charakteristik/-Strahlenradien, monochromatisch kohärent, mittels optischer Elemente der Strahlungsführung bzw. Strahlen-Formgestaltung fokussierter Komponentenbestandteile, nach Beschreibung bzw. Anlehnung von Propagationen sich selbst fokussieren Laserstrahlung nach Gaus 24, koheränte Laser-Ausbreitungs-Charakteristika 25, 26, 27, Energieumwandler 28, Einspeisung in öffentliche Stromversorgungsnetze 29, Besetzungsinversionen 30

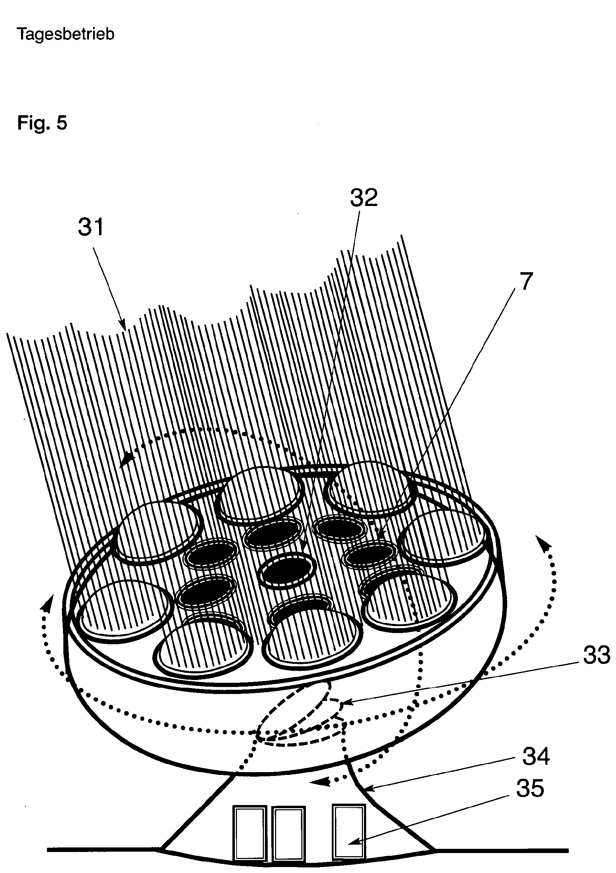

Fig. 5 - skizzenhaft perspektivische Darstellung einer erfindungsgemäßen Kraftwerksanlage zur Stromentwicklung: EckigeAnlagen-/ Gehäuse Bauweise 36, Sonnen-/Lichteinstrahlung 31, Hydraulik-Gehäuse 32, motorisierte Drehachsen-Vorrichtung, stufenlos computergesteuert nach Sonnenstand, Neigungswinkel verstellbar, waagrecht-/senkrecht-/höhenverstellbar 33, mindestens ein Energieumwandler 14

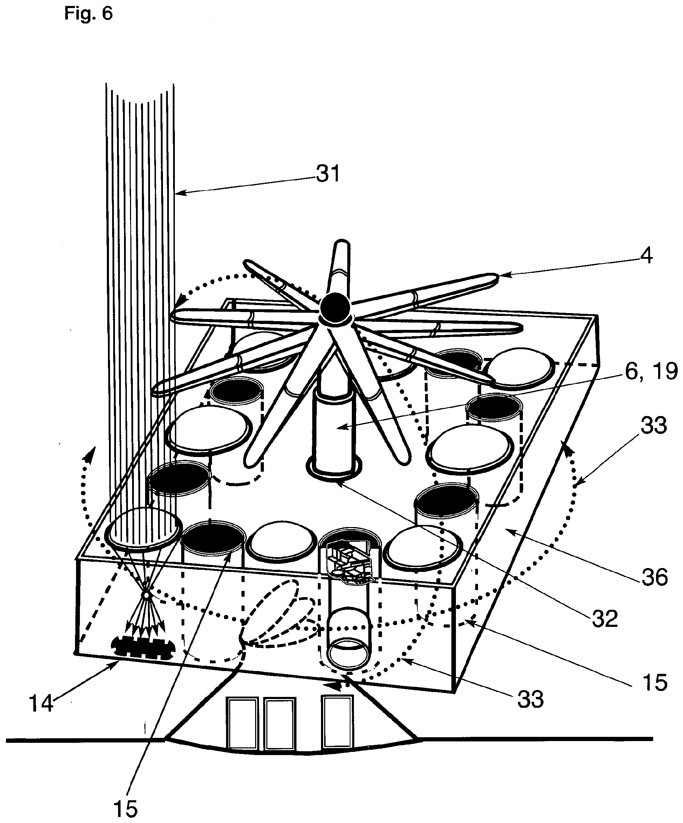

Fig. 6 - skizzenhaft perspektivische Darstellung einer erfindungsgemäßen Kraftwerksanlage zur Stromentwicklung: Betriebs-/Kontrollräume, Motorraum 34, Neigungswinkelmechanik 33 adäquat Sonnenstand, Zugangstüren Steuerungszentrale 35

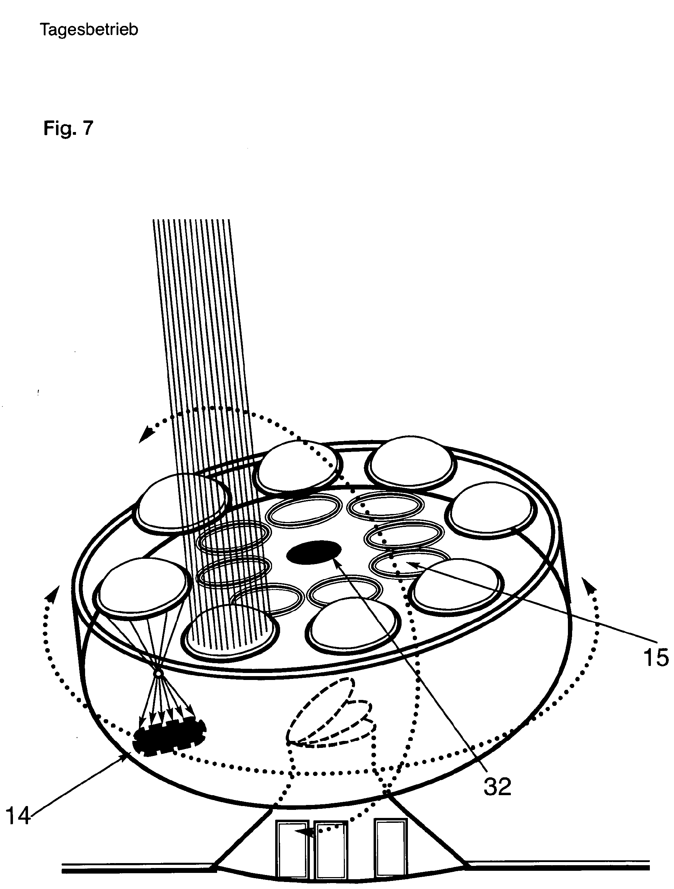

Fig. 7 - skizzenhaft perspektivische Darstellung einer erfindungsgemäßen Kraftwerksanlage zur Stromentwicklung: Besetzungsinversionen 30

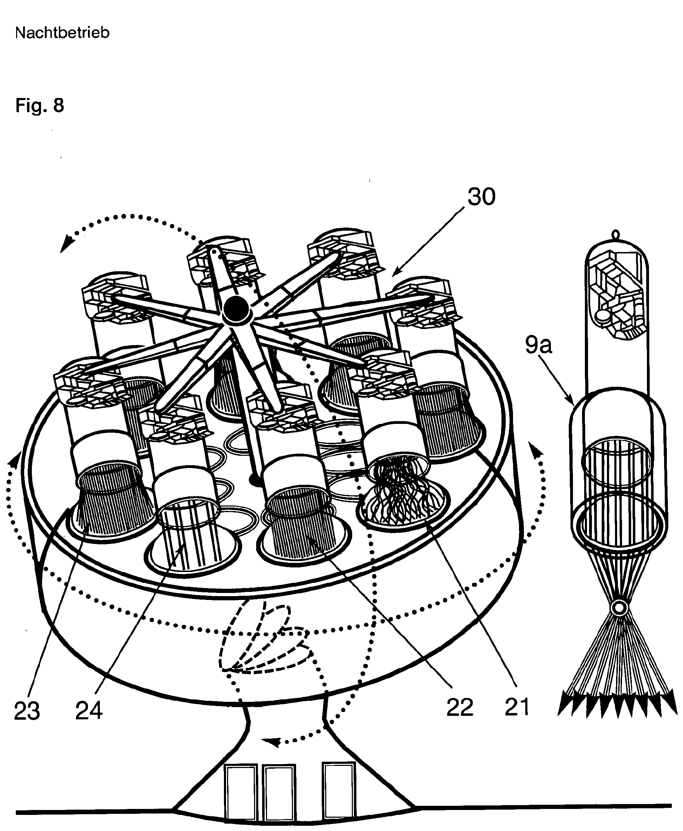

Fig. 8 - skizzenhaft perspektivische Darstellung einer erfindungsgemäßen Kraftwerksanlage zur Stromentwicklung: wahlweise maximal effektiver Abstrahlungs-Charakteristik verstärktem Lampen-/LED-Licht kugelförmig (inkohärent) 21, mehrere Laser-Lichtpunktstrahler kohärenter Punkt-Abstrahlungsstrahl Charakteristik 24, Laser-Lichtstrahler kohärenter Abstrahlungs-- Charakteristik 22

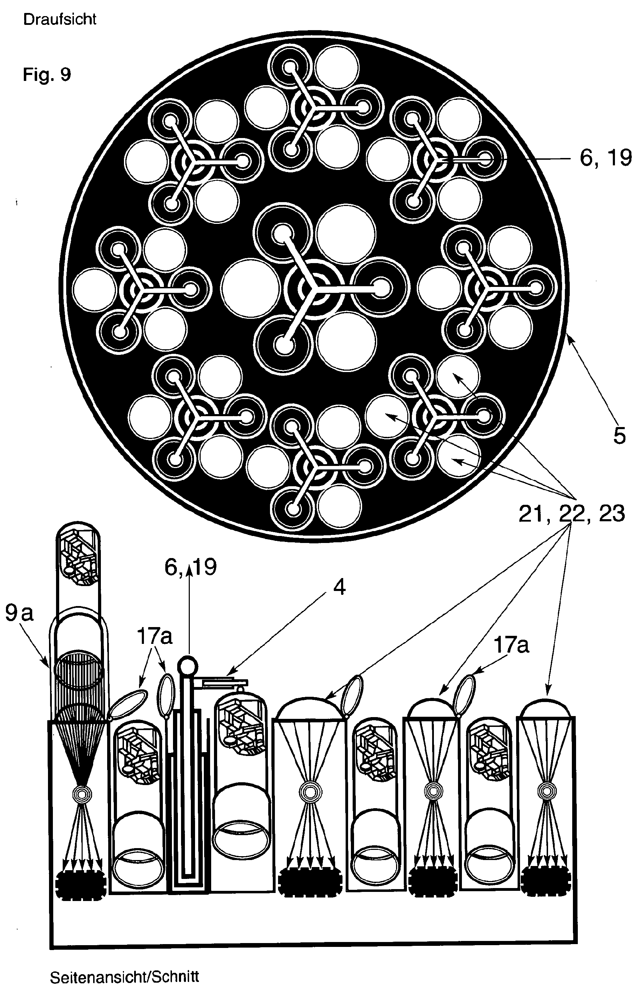

Fig. 9 - skizzenhaft perspektivische Darstellung einer erfindungsgemäßen Kraftwerksanlage zur Stromentwicklung: Draufsicht von Anordnungsgruppen relevanter Sammellinsensysteme 21, 22, 23, sowie Parkpqsitionsbehältnisse für Laser-Lichtstrahler 19, computergesteuert drehbare Hydraulik-/Teleskopsystematik 17, hydraulische Schutzabdeckung 17a

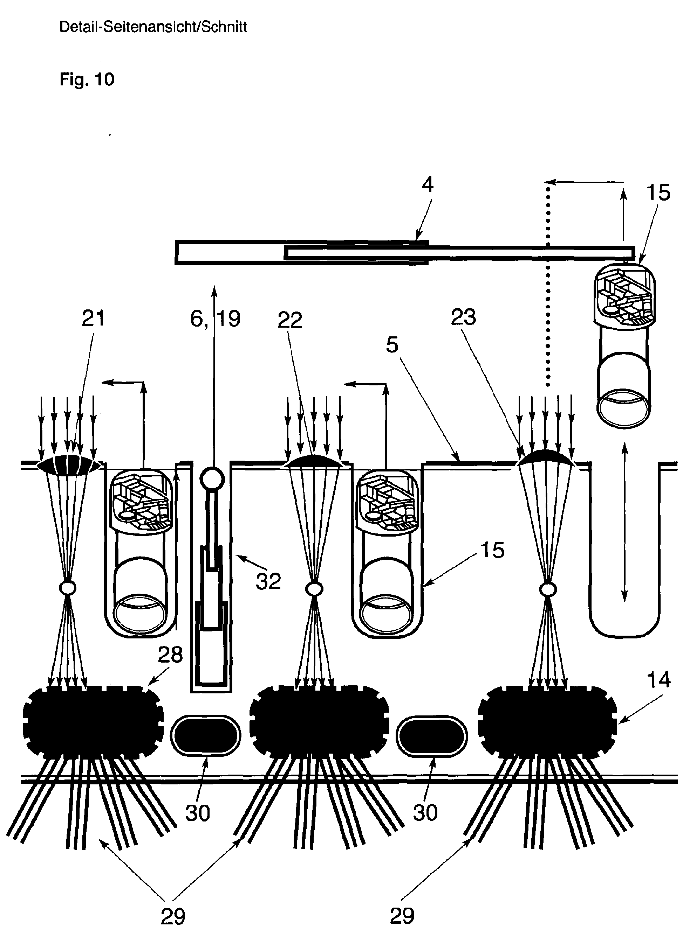

Fig. 10 - skizzenhaft perspektivische Darstellung einer erfindungsgemäßen Kraftwerksanlage zur Stromentwicklung: Seitenansicht/- Schnitt konvertible Linsencharakteristika 21, 22, 23 adäquater Sollwert Leistungsvorgaben, Energieumwandler 28, Teilansicht Teleskopmechanik zur Laserstrahler Positionierung 17, symbolische Darstellung Stromnetz Verteiler 29, Besetzungsinversionsdepots 30.

Gleiche Teile sind in allen Figuren mit denselben Bezugszeichen versehen.

Gezeigt ist ein fokussierendes Vorrichtungs-Absorber-Energie-Kraftwerksystem zur regenrativen Stromerzeugung, das nachhaltig sowie klimaneutral über fokussierende Sammellinsen-/ bzw. Zerstreuungs-Linsen-Systeme, während Tageszeiten infolge Sonnenlicht-Einstrahlung, überdies periodisch aktiv, und während Nacht-/bzw. Dunkelheitszeiträumen, darüber hinaus während Schlechtwetterphasen, wie beispielsweise u.a. starke Bewölkung, symbiotisch und in Wechsel-/Funktion- und Wirkung, mittels systemseitig stimulierter Laser-Licht-Emissionen sowie relevant computergestützter Rückkopplungsschleifen und kraft redundanter Laser-Lichtquellen, gestützt durch systemisch verbrachte Besetzungsinversionen, zur Erzielung erforderlicher Temperatur-Sollwerte, mittels mindestens eines geschlossenen (Zerstreuungs-) Sammellinsensystems, in Mengen, Anzahl, Größen, Anordnung und Wirkungstiefe, konvergierende Lichtbündelungen erzeugt und durch/in einer Vielzahl entstehender Brennpunkte f, mittels und Einsatz bzw. Aktivierung entsprechender Energie-Umwandlungsysteme elektrischen Strom erzielt, der zur Einspeisung in öffentliche Stromnetze oder alternativ durch computergestützte Rückkopplungsschleifen wiederum zur Aufladung der Besetzungsinversiosionen vorgesehen ist.

Das fokussierende Vorrichtungs-Absorber-Ener- gie-Kraftwerksytem zur Stromerzeugung kann Sonneneinstrahlung, vorzugsweise unterstützt durch ein zusätzlich zwischengeschaltetes Kollektorglas, Sonnen-/- Tageslichteinstrahlung, vorzugsweise in einem idealen Direktbestrahlungswinkel, durch ein Sammel-Linsensystem über und durch einen Brennraum/Brennpunkt f, im Mittelpunkt vereinigen, sodass bereits im ersten Stadium einer Energiegewinnung bereits fokussierte Strahlenbündel einer maximale Fokussierung zugeführt werden, um dadurch noch höhere Temperaturwerte, auch und besonders in der Summe der Brennpunkte, zu erzielen.

Das fokussierendes Vorrichtungs-Absorber-Energie-Kraftwerksytem zur Stromerzeugung kann insbesondere nicht beeinflussbare Abhängigkeiten wie Tages- bzw. Solarlichteinstrahlung in Nacht-/Tages-/ sowie Schlechtwetterphasen, wie beispielsweise Schnee- und/ oder Kondens-Feuchtbelag überbrücken, und somit weitestgehend lückenlos und störungsfrei die Stromerzeugung gewährleisten.

Das fokussierendes Vorrichtungs-Absorber-Energie-Kraftwerksytem zur Stromerzeugung stellt ein in sich geschlossenes, in Wechselfunktion integriertes konvergierendes Gesamt-Sammellinsensystem bereit, das in Symbiose mit einem mehrfach funktionalen Laserstrahlungssystem nur teilweise externer, überwiegend jedoch intern generierter Besetzungsinversion, mittels stimulierter Lichtemissionen bzw. mindestens einem laserresonatoraktiven Medium in Kettenreaktion weitere Emissionen bzw. Pumpleistungen als Energieausschüttungs-Ergebnisse hervorbringt.

Das fokussierende Vorrichtungs-Absorber-Energie-Kraftwerksytem zur Stromerzeugung leitet die Sonnen-bzw. Tageslichteinstrahlung durch ein Sammel-Linsensystem aus speziell gefertigten Glaskeramikstrukturen, mit geringer Wärmeausdehnungskoeffizienz, sowie stabiler Festigkeitsstruktur, sog. Hybriden. Diese aus Glaskeramik bestehenden Materialien haben sich bereits in der Vergangenheit, grade und auch unter industriell extremen Belastungsprozessen, besonders unter Einfluss extrem hoher Temperaturen und Langzeitbelastungsphasen als äußerst stabile Materialien ausgezeichnet und bewährt.

Das fokussierende Vorrichtungs-Absorber-Energie-Kraftwerksytem zur Stromerzeugung umfasst Glaskeramik-Linsen oder Linsen-- Gläser oder auch teilkristallines Glas, sog Hybride, als Wirtskristalle für geeignete laseraktive Dotierungen. Diese Wirtskristalle zeichnen sich sowohl durch eine besonders hohe mechanische Festigkeit als auch durch äußerst niedrige thermische Ausdehnungskoeffizienten aus.

Das fokussierende Vorrichtungs-Absorber-Energie-Kraftwerksytem zur Stromerzeugung umfasst Glasoptikenwerkstoffe, beispielsweise auch Flintgläser, in Größen von vorzugsweise bis zu 700 mm Durchmesser, die je nach Leistungs-Bedarfsberechnungen zum Einsatz kommen könnten und adäquat zu örtlichen Rahmenbedingungen d.h. erforderlichen Stromenergie-Bedarfsanforderungen/Volumina in Menge, Anzahl und Anordnung auf entsprechenden noch zu beschriebenenden Trägermedien im Kontext mit anderen noch zu beschreibenden Baukomponenten positioniert werden. Baukomponenten können insbesondere alternative Bau-Materialien z.B. Fassungen der Linsen aus Edelstahl, Kunststoff, oder Informationsmaterialien wie beispielsweise elektronische Daten-Speichermedien sein

Das fokussierende Vorrichtungs-Absorber-Energie-Kraftwerksytem zur Stromerzeugung umfasst in einer Position nach Eintritt des Sonnenlichts Sammel-Linsen, sog. sphärische oder auch asphärische Linsen. Dies könnten Plankonvexlinsen, Bikonvexlinsen, Bikonvexlinsen asymetrisch oder Konkavkonvexlinsen (Meniskus) mit für die im Kontext vorliegende Erfindung entsprechender Oberflächenkrümmung sein. Darin konvergiert Licht und fokussiert im Brennpunkt/Focus f. Nach Eintritt des Lichts über das Sammel-Linsensystem, wenn das konvergierte Licht im Brennpunkt F fokussiert ist und die entstehenden Energiepotentiale durch geeignete Umwandlungssysteme in Stromenergien umgesetzt werden, werden diese nunmehr umgewandelten in Stromnetze weiterleitet bzw. segmentiert in hierfür parallel im stand-by-Modus geeignet aufnahmefähige Strom-/- Speicher-/Batterie-Depots für einstrahlungsschwache Tages-/ bzw. Nachtphasen bevorratet, bzw. in ander externe Stromstrukturnetze weiterleitet.

Das fokussierende Vorrichtungs-Absorber-Energie-Kraftwerksystem zur Stromerzeugung umfasst eine Kombination einer bestimmten Anzahl sphärischer und/oder asphärischer Sammel-Linsen, unter konstant bzw. intensiver vor allem winkeladäquater Solareinstrahlung, idealerweise bei 90°, die eine Schlüsselfunktion im Kontext mit integrierter Lasertechnik, sog. Mikrolinsenarrays erfüllen, um signifikante Temperaturvolumina in Brennpunkten/Brennräumen von/ab 350°C und darüber hinaus zu erzielen, wobei eine energetische und zielführende Zerlegung/Intensitätsverteilung von Strahlenbündeln erfolgt.

Das fokussierende Vorrichtungs-Absorber-Energie-Kraftwerksystem zur Stromerzeugung umfasst innnerhalb einzelner Sammel-Linsen, vorzugsweise direkt unter deren Oberfläche, endogen beheizbare, transparente Heizleiterlegierungen, um Eis oder Schnee abzutauen bzw. Feuchtigkeitsablagerungen wie beispielsweise Kondenswasser zu verdampfen. Dies soll insbesondere durch Edelstahllegierung aus Cr-Ni-, Cr-Al oder auch beheizbare ringförmige transparente Glasringe-/ oder wärmeführend geeignete Netzgefüge, endogen verbracht/eingegossen, erreicht werden. Drainagenablaufrinnen/rillen sollen Tauwasser oder Kondenzwasserbeaufschlagung in/auf stufen- los beweglich gelagerten bzw. drehbaren Sammellinsen-Ebenen, d.h. für Laserlicht-Trägerflächen ungehinderten Stau-/Wasserablauf, gewährleisten.

Das fokussierende Vorrichtungs-Absorber-Energie-Kraftwerksystem zur Stromerzeugung ist dafür ausgelegt, dass die durch/an einzelnen Brennpunkten f an Sammel-Linsen enstandenen Temperaturwerte in Gesamtsumme, zunächst separat mittels Solareinstrahlung in/über die Sammel-Linsen-Brennpunkt-Systematik, computergesteuert zu jeder Zeit, sich in erforderlich und computergesteuert Ideal-Einstrahlungsposition befindet und erzielte Temperaturwerte an prädestiniert intensitätsmaximierende Stromumetzungsvorrichtungen weiterleitet.

Das fokussierende Vorrichtungs-Absorber-Energie-Kraftwerksytem zur Stromerzeugung sieht vorzusgweise vor, dass nunmehr erzeugter Strom, die über ein Sammellinsen-System entstandene Primär-Energie-Stromenergiepotenziale bedarfsadäquat in öffentliche Stromnetzstrukturen eingespeist werden. Überschüssige Strommengen, bzw. reduziertem Energieabruf öffentlicher Bedarfe, sollen in redundante Strom-Energievolumina in Speicherdepots zur Aufrechterhaltung des Gesamt-Betriebsystems des Kraftwerks bevorratet und zur Wiederaufladung sog. Bordbatterieeinheiten genutzt werden.

Das fokussierende Vorrichtungs-Absorber-Energie-Kraftwerksytem zur Stromerzeugung sieht vor, dass bei Unterbrechung einer ansonsten relativ regel-/- gleichmäßig tolerablen Solar-Einstrahlung es bei längeren Bewölkungsphasen, systemseitig intolerabelen Veränderungen bestimmter Temperaturwerten, d.h. in der Folge energiereduzierter Auffälligkeiten, auch hinsichtlich äußerlichen Temperatur-Rahmenbedingungen, sich computererfasst und zeitgleich im Bedarfsryhthmus nach o.a. Kriterien, synchron Stromenergiespeicher-/Batterieakkus zuschalten und, zeitlich begrenzt, entsprechend hierfür nötige Strom-Leistungsvolumina abrufen, um wieder einen stabilen Status Quo herzustellen, bzw. diesen wieder zu gewährleisten.

Das fokussierendes Vorrichtungs-Absorber-Energie-Kraftwerksystem zur Stromerzeugung ist dafür ausgelegt, dass bei zeitlich länger zu erwartenden Solar-Einstrahlungsausfällen, wie beispielsweise Regenschauerszenarien, längere starke Bewölkungsphasen, oder Szenarien, bei denen fehlende oder auch schwache Helligkeitswerte durch Schneefall, Nebel etc.auftreten, das System automatisch auf einen sog. Dunkelheitsmodus schaltet, um den erforderlichen Energieausstoß, bzw. das relevante Strom-Leistugsniveau während und nach Sonnenuntergang zu erhalten. Dazu werden ab tatsächlich messbarer registrierten bzw. maximalen Dämmerlichtwerten systemseitig zusätzlich Laser-Lichtsysteme zugeschaltet, stimulierte Laser-Lichtemissionen entwickelt, um die Sollwerte zu erhalten und zur weiteren und allgemeinen Energieabsicherung beizutragen.

Das fokussierende Vorrichtungs-Absorber-Energie-Kraftwerksystem zur Stromerzeugung berücksichtigt, dass zur Erzeugung von Laserstrahlung im Regelfall externe Besetzungsinversionen erforderlich sein können. Mehrere zur Wahl stehende Inversionensquellen eignen sich, um diese Voraussetzung zu erfüllen. Primär kann systemseitig ein in symbiotischer Koexistenz, kompatibel, ein in sich geschlossenes und Computer vernetzt stehendes Energiedepot diese Forderung gewährleisten. Sekundär bietet sich eine bereits Jahrmillionen bestehende, und weitere Millionenjahre bestehende, jedoch noch immer professioell nicht genuzte Besetzungsinversion der Geothermie-Nutzung.

Das fokussierende Vorrichtungs-Absorber-Energie-Kraftwerksystem zur Stromerzeugung ist dafür ausgelegt, dass mit der hier erfindungsgemäß computergesteuerten Wechseloptik an Ausgängen der Laserquellen, zum Eingang von Kollimator-/SammelLinsensystemen, koherentes oder wechselweise divergentes, je nach nachfolgend eingesetzten Strom-Umwandler- systemen zum Brennpunkt f, durch das Laser-Licht- verstärkungssystem, divergente Strahlungsbündel oder koherente Flächenstrahlung möglich sein soll, um in wahlweise mit der einen oder anderen beschrieben Wechseloptik an Ausgängen der Laserquellen, nach dem Brennpunkt f Kollimator-/Sammel-Linsensystemen, an/durch/mittels eines adäquaten Umwandlersystems besonders effiziente Strom-Energiegewinnung zu erzielen.

Das fokussierende Vorrichtungs-Absorber-Energie-Kraftwerksystem zur Stromerzeugung berücksichtigt vorzugsweise, dass sich für diese neue Laser-Modell-Kategorie eines neuen Laser-Lichtverstärkungssystems mittels Wechseloptik, einer neuen Lasertyp-Variante als Basis, ein modifizierter Festkörperlaser oder modifizierter Helium-Neon-Laser eignen könnte. Bei der Vielzahl und Variabilität unterschiedlichster Laserprinzipien zur Erzeugung von Licht- emissionen nach Theodore Mainman, Athur Schaw- low, Albert Einstein, Charles Townes und anderen, stellt die für das erfindungsgemäße, durch Wechsel- optik bereicherte Laser-Lichtverstärkungs-System Energie-und Kraftwerksystem eine Weiterentwicklung dar.

Das fokussierende Vorrichtungs-Absorber-Energie-Kraftwerksystem zur Stromerzeugung ist dafür ausgelegt, dass das erfindungsgemäße Lichtenergetische-Laser-Stromkraftwerk über deponierte d.h. gespeicherte Energiereserven/Besetzungsinversion primär und speziell für ein systemseitiges Betriebs-Energiesystem verfügt, um damit die Aufrechterhaltung der Produktion von Licht-Emission-und Energieeinstrahlung selbst während zeitweiser, ungünstiger Witterungseinflüsse oder schwächelnder Lichteinstrahlung zu ermöglichen.

Das fokussierende Vorrichtungs-Absorber-Energie-Kraftwerksystem zur Stromerzeugung berücksichtigt in einem Aspekt, dass ausschließlich Tageslicht-/Sonnenlicht in ein Zerstreuungslinsen-/System eindringt, welches sich in bestimmter Anzahl, Anordnung, Größen-Durchmessern, räumlicher Abstrahlcharakteristik, zunächst inkohärent, im Verlauf monochromatisch, sich einen Brennpunkt f trifft, im weiteren Strahlenverlauf nach dem Brennpunkt, koherent d.h. nahezu mit paralleler Ausbreitung, bildet. Das beschriebene Sammel-Linsensystem befindet sich sysstemseitig auf einer dreh- bzw. schwenkbar, hydraulisch Computer gesteuerten, je nach Sonnenstand-Licheinstrahlung, idealerweise bei 90° Winkelstellung zur Einstrahlung, auf einer Einstrahlungs-Primärebene. Wird optische Strahlung höherer Intensität zugeführt, kann parallel mittels einer Eigenfokussierung ein zusätzlich signifikanten Effekt ereicht werden. Dadurch würde eine Vervielfachung der Frequenzverdopplung erzielt und eine Maximierung der Stromenergie erreicht werden können.

Das fokussierende Vorrichtungssystem als Absorber-Kraftwerk zur Stromerzeugung berücksichtigt in einem Aspekt, dass bei mangelnder- bzw. abnehmender Lichteinstrahlungsintensität, ab einem bestimmten unteren und computererfassten Sonnen-/Licht- Einstrahlungsniveau, beispielsweise zur Abend-Dämmerung, bzw. ab eingetretener Dunkelheit, eine systemseitig übergelagerte, über der unter Punkt 19. beschriebenen Einstrahlungs-Primärebene, eine dreh- und schwenkbaren Hydraulik Laser-Abstrahlungs-Sekundärebene, integrierten Laserlichtquellen-Vorrich- tung computergesteuert positioniert.

Das fokussierende Vorrichtungssystem als Absorber-Kraftwerk zur Stromerzeugung umfasst ein Laserlicht-Verstärkersystem, gekoppelt an mindestens eine interne Besetzungsinversion, in/ durch die auf der Einstrahlungs-Primärebene angeordneten Sammel-Linsen Laserlichtstrahlung, möglicherweise ausgestattet und computergesteuert, mit zuschaltbaren Wechseloptiken, die koherente bzw. inkoherente strahlförmige Fokus-Laser-Strahlenbündel einleitet, dort jeweilige f - Brennpunkte bildet, um eine Fortdauer eines steuerungsgemäßen intensiven Bestrahlungs Ablaufs durch/über geeignete Umsetzungssysteme für nächtlich erforderliche Betriebs-Aktivität zu gewährleisten und Tageslichteinstrahlung adäquat zu ersetzen.

Das fokussierende Vorrichtungssytem als Absorber-Kraftwerk zur Stromerzeugung umfasst für eine nächtlich angepasste Energieversorgung ein systemseitig zusätzlich vorhandenes Laser-Lichtquellen-System, das hydraulisch zuschaltbar ist, und in dem nach entsprechenden Rahmenbedingungen, auswechselbar polychromatische Laserlicht-Zerstreuungsoptiken, ähnlich der einer Tageslicht intensiven Sonnen-Streulichtenstrahlung oder, je nach Spezifikation, andere effektiv-ökonomisch koherente Focus-Laser-Hauptstrahloptiken zum Einsatz kommen.

Das fokussierende Vorrichtungssystem als Absorber-Kraftwerk zur Stromerzeugung umfasst eine Laser-Abstrahlungs-Sekundärebene,die im Kontext örtlicher Licht-/Wetter-/Bedingungen automatisch ausgelöst wird, und exakt über der fokussierenden Sammellinsen-Einstrahlungs-Primärebene, in einer kongruenten Stellung hydraulisch computergesteuert positioniert wird, welche zusätzlich bzw. ergänzend Laser-Lichtquellen in bestimmter Anordnung, Menge und Tiefenwirkungsintensität, positioniert auf der Laser-Abstrahlungs-Sekundärebene, bei/für nächtlichen Dunkelheitsphasen, d.h. auch sensorisch gemessenen längere Bewölkungsab schnitten ergänzend, Strom-Energieergebnisse über gespeichert interne Bezugsinversionsvorkommen abruft, dosiert aktiviert und damit sichert.

Das fokussierendes Vorrichtungssytem als Absorber-Kraftwerk zur Stromerzeugung sieht in einem Aspekt vor, dass sich auf der sog. Sekundärebene eine bestimmte Anzahl laseraktiv optischer Mediasysteme befinden, ausgestattet jeweils mit mindestens einen Laserresonator der Photonen anregt, stimulierte Lichtemissionen erzeugt um in Folge und konstant weitere Emissionen auszulösen. Daher besteht zwischen Sammellinsen-Einstrahlungs-Primärebene und Laser-Abstrahlungs-Sekundärebene ein elementar und unabdingbares Koexistenzverhältnis. Primär- und Sekundärebene beinhalten und bilden ein in sich geschlossenes, computer- sowie hydraulisches Steuerungssystem, von fundamentaler Funktionsabhängigkeit, und ermöglichen zur zielführenden Wirkungskraft einen exakt entschiedenen, durch Lasermessung bestätigten Positionierungspunkt des hydraulischen Drehungbewebungsmechanismus des beweglichen Gesamtsystems.

Das fokussierende Vorrichtungssytem als Absorber-Kraftwerk zur Stromerzeugung sieht bevorzugt vor, dass im Sinne systemseitiger Flexibilität computergesteuert mechanische Wechselfähigkeit der Laserausgangsoptik, Laserstrahlcharakteristik unter Gesichtspunkten weitestgehend effizienter Energieausbeute, fokussierend kohärente Strahlung generiert oder inkohärente Strahlung durch das darunter befindliche Primär-Sammellinsen-/Brennglas-System als Wellen-Zerstreuungslichtstrahlung Brenngläser durchdringt, um somit adäquat und weitestgehend annähernd Sonneneinstrahlung, ggf. über zwischengeschaltet geeignete Dispersions- bzw. Polarisationsprismen Strahlungscharakter des Sonnenlichts zu reproduzieren/zu imitieren, Brennpunkte zu aktivieren und zur Weiterleitung an Umwandlersysteme zu veranlassen.

Das fokussierende Vorrichtungssystem als Absorber-Kraftwerk zur Stromerzeugung siehrt in einem Aspekt vor, dass grundsätzlich zur Schaffung von Laserstrahlung zunächst externe Netz-Strom-Energie zugeführt werden sollte. Eine zur Aktivierung von Pumpmechanismen zur Herstellung des Laserprozesses erforderliche Besetzungsinversion, steht primär zunächst aus erzeugter Eigenenergie aus entsprechenden Volumina, nach Erfahrugswerten und errechneten Verbrauchswahrscheinlichkeiten aus entsprechenden Speicher-Depots und deren Volumina zur Verfügung.

Das fokussierende Vorrichtungssystem als Absorber-Kraftwerk zur Stromerzeugung sieht in einem Aspekt vor, dass innerhalb der oder jeder Lasereinheit ein Resonator innerhalb je eines laseraktiven Mediums positioniert ist. Resonatoren sind günstig um systemseitig und wirkungsadäquat, für das erfinderich beschriebene Absorber-Kraftwerk zur Stromerzeugung, die entsprechenden Mengen an Photonen zu erzeugen, um weitere stimulierte Emissionen zu erzeugen. Beispielsweise könnten für das erfindungsgemäße Absorber-Kraftwerk zur Stromerzeugung Festkörperlaser u.ä. Systeme, hauptsächlich mit laseraktiven Medien dotierten Kristallen und/oder Glas-/Hybriden in Funktion stehen, und für stimulierte Lichtemissionen systemseitig im Strombrennglas-Laserkraftwerk Verwendung finden.

Das fokussierende Vorrichtungssystem als Absorber-Kraftwerk zur Stromerzeugung sieht in einem Aspekt vor, dass zur Herstellung/Gewinnung von Stromenergie eine Durchdringung/Durchstrahlung, zu den jeweiligen Brennpunkten, mittels stimuliert emittierender Laserstrahlung durch systemseitig wechselnde, mit Laser-Strahlen-Bündelung und/oder Laser-Zerstreungslicht durch optische Sammellinsen-Systeme erfolgt, um nach computererfasstem gemessenen Maximal-Energieergebnis bzw Sollwerte hält und erzielt, um im Anschluss diese Stromenergie primär in ein allgemein öffentliches Stromnetz einzuspeisen. Parallel bzw. zeitgleich können bestimmte Energie volumina wiederrum auch in interne Speicherdepots zur Bevorratung in Batteriedepots eingeleitet werden.

Das fokussierende Vorrichtungssystem als Absorber-Kraftwerk zur Stromerzeugung berücksichtigt in einem Aspekt, dass geeignete Standorte einer störungsfreien Lichteinstrahlung von erheblicher Bedeutung sind. Dabei sind ebenso essenziell Vorteile bestimmter topografischen Lagen welche eine bis zum totalen Sonnen- untergang störungsfreie Lichteinstrahlung ermöglichen. Für die ersten morgendlichen Lichtemissionen von Sonneneinstrahlung, ebenso wie die letzte, selbst abnehende Einstrahlungsenergie, sind und wären beispielsweise Hanglagen, besonders für optimale Licht-/Einstrahlungs-Emissions-Ergebnisse geeignet.

Das fokussierende Vorrichtungssystem als Absorber-Kraftwerk zur Stromerzeugung berücksichtigt in einem weiteren Aspekt, dass unabhängig und idealerweise von Hanglagen, durch beschriebene und computergesteuerte System- steuerung der Fähigkeit von Neigungs-/Drehungs-/ sowie hydrauscher Höhenpositionierung, ähnlich bekannter Systematisierung der bei Riesen-Spiegelteleskopen, gemäß jedem Sonnenstand optimal nutzbringender Lichteinfallswinkel grundsätzlich zu Grunde zu legen ist.

Das fokussierende Vorrichtungssystem als Absorber-Kraftwerk zur Stromerzeugung ermöglicht in einem Aspekt, dass das erfindungsgemäße Kraftwerk-Strom-Energie-System, bzw. das fokussierende Sammellinsen-Vorrichtungssystem, als Absorber-Kraftwerk, zur Strom-Energiegewinnung mittels Solar-Einstrahlung, im Zusammenwirken, Symbiose und in Verbindung von Rückkoppplugsschleifen, sämtlicher o.a. Fakten zu klimaneutraler Energiegewinnung, gleichzeitig allgemeiner Ressourcenschonung Bereich Energiegewinnung, Sollwerte erzielt und damit den Terminus Nachhaltigkeit dokumentiert.

### Bezugszeichenliste

- 1: Linsenoptik/en beheizbar, Sammellinsen, Zerstreuungslinsen z.B. Flintgglas bzw. Kronglas
- 2: Laser-Strahlersysteme bzw. transversale Lasermoden
- 3: Draufsicht Laserstrahler an Teleskoparm
- 4: Teleskop-Armmechanik zur waagrechten Laser-Positionsbestimmung
- 5: Primäre Trägerebene mit Sammellinsen bzw. Zerstreuungslinsen
- 6: Höhenverstellbare hydraulische Drehachse, in Verbindung mit 19
- 7: Parkpositionsbehältnis für Laser-Licht-Strahler
- 8: Laser-Hardware (Elektronik)
- 9: Laserstrahler, 9a nächtliche Lichtschutz-- Zylinder/Vorrichtung
- 10: Stimulierte Laser-Licht-Emission
- 11: Fukussierte Laser-Licht-Strahlung
- 12: Brennpunktf
- 13: Weglänge/Brechungsindex
- 14: Energieumwandler
- 15: Parkpositionsbehältnis Laser-Licht-Strah- ler
- 16: Innenraum Kraftwerkanlage
- 17: Gehäuse Laser-Licht-Strahler, 17a hyd- raulische Abdeckungsvorrichtung
- 18: Positonsbestimmung Laser-Licht-Strahler
- 19: Hydraulische Teleskopmechanik für senkrechte Positions-Bestimmung in Verbindung mit 6
- 20: Hydraulische Teleskopmechanik für wag- rechte Positions-Bestimmung in Verbindung mit 4
- 21: Sonnenlicht-Strahlencharakterisik polychromatisch/inkohärent/kugelförmige (LED-bzw.)
- 22: Laser-Licht-gestützter Punktstrahler
- 23: Laser-Licht-Strahlencharakteristik monochromatisch/kohärent
- 24: mehrfach gestützte Laser-Punktlicht-Strahler
- 25: Abstrahlungs-Wellenlänge/Brennweite/- Brechungsindex ab f adäquat Einstrahlung
- 26: Abstrahlungs Wellenlänge/Brennweite/- Brechungsindex ab f adäquat Einstrahlung
- 27: Abstrahlungs Wellenlänge/Brennweite/- Brechungsindex abf adäquat Einstrahlung
- 28: Besetzungsinversion/en
- 29: Netzeinspeisung
- 30: Sekundäre Trägerebene mit
- 31: Solareinstrahlung
- 32: Parkposition Teleskop-/ Hydraulikarm-- Mechanik
- 33: Kraftwerksanlage computergesteuerte Bewegungshydraulik adäquat Sonnen- stand
- 34: Basis-Gehäuse Kraftwerks-Gesamtanlage
- 35: Zugangstüren zu innerer Kraftwerks-Gesamtanlage

## Patentansprüche

1. Kraftwerkssystem mit einer Anzahl von durch Licht gespeisten Energiewandlern, denen lichtseitig eine Sammellinsen-Anordnung vorgeschaltet ist und denen stromseitig eine Anzahl von Speicherelementen nachgeschaltet ist, **dadurch gekennzeichnet, dass** in den Speicherelementen Besetzungsinversion hergestellt werden kann, wobei die Speichersysteme zur Erzeugung von Laserlicht ausgelegt sind, das auf die Energiewandler eingestrahlt wird.

2. Kraftwerkssystem nach Anspruch 1, dessen Sammellinsen-Anordnung einen Diamant-Facetten-Schliff aufweist.

3. Kraftwerkssystem nach Anspruch 1 oder 2, deren Sammellinsen jeweils mit einer integrierten Beheizungsvorrichtung versehen sind.

4. Kraftwerkssystem nach einem der Ansprüche 1 bis 3, bei dem mindestens eine der Sammellinsen mit einer Drainage-Ablaufrille versehen ist.

## Claims

1. A power station system with a number of energy converters supplied by light, upstream of which on the light side is an array of converging lenses and downstream of which on the current side is a number of storage elements,
**characterised in that**
population inversion can be produced in the storage elements, wherein the storage systems are designed to generate laser light, which is irradiated onto the energy converters.

2. A power station system according to claim 1, whose array of converging lenses includes a diamond-facet cut.

3. A power station system according to claim 1 or 2, whose converging lenses are respectively provided with an integrated heating device.

4. A power station system according to one of claims 1 to 3, in which at least one of the converging lenses is provided with a drainage groove.

## Revendications

1. Système de centrale électrique avec un certain nombre de convertisseurs d'énergie alimentés par de la lumière, munis d'un dispositif de lentilles de collecte en amont du côté de la lumière et avec un certain nombre d'éléments de stockage en aval, **caractérisé par** la possibilité de produire une version d'occupation dans les éléments de stockage, les systèmes de stockage étant conçus pour produire de la lumière laser qui est irradiée sur les convertisseurs d'énergie.

2. Système de centrale électrique selon la revendication 1, dont le dispositif de lentilles de collecte présente une taille à facettes diamant.

3. Système de centrale électrique selon les revendications 1 ou 2, dont les lentilles de collecte sont équipées chacune d'un dispositif de chauffage intégré.

4. Système de centrale électrique selon l'une des revendications 1 à 3, dans lequel au moins une des lentilles de collecte est munie d'une rainure de drainage.
